(19) **Europäisches Patentamt**

**European Patent Office**

**Office européen des brevets**

(11) Veröffentlichungsnummer: **0 005 469**
**B1**

(12) **EUROPÄISCHE PATENTSCHRIFT**

(45) Veröffentlichungstag der Patentschrift: **15.04.81**

(21) Anmeldenummer: **79101279.2**

(22) Anmeldetag: **27.04.79**

(51) Int. Cl.³: **F 28 C 3/14, C 04 B 7/44**

(54) Schachtförmiger Gegenstrom-Wärmetauscher.

(30) Priorität: **22.05.78 DE 2822215**

(43) Veröffentlichungstag der Anmeldung:
**28.11.79 Patentblatt 79/24**

(45) Bekanntmachung des Hinweises auf die Patenterteilung:
**15.04.81 Patentblatt 81/15**

(84) Benannte Vertragsstaaten:
**FR GB IT**

(56) Entgegenhaltungen:
**DE - A - 1 801 354**
**DE - A - 1 906 897**
**DE - A - 2 230 489**
**DE - B - 1 154 768**
**FR - A - 1 559 407**
**FR - A - 2 221 039**
**FR - A - 2 312 002,**

(73) Patentinhaber: **Krupp Polysius Aktiengesellschaft**
**Graf-Galen-Strasse 17**
**D-4720 Beckum (DE)**

(72) Erfinder: **Tegtmeier, Gert**
**von-Bodelschwingh-Strasse 22**
**D-4740 Oelde 1 (DE)**
Erfinder: **Goldmann, Wolf**
**Agnes-Miegel-Strasse 9**
**D-4720 Beckum (DE)**
Erfinder: **Triebel, Wolfgang**
**Mierendorffstrasse 19**
**D-4740 Oelde (DE)**

(74) Vertreter: **Tetzner, Volkmar, Dr.-Ing. Dr. jur.**
**Van-Gogh-Strasse 3**
**D-8000 München 71 (DE)**

Courier Press, Leamington Spa, England.

## Schachtförmiger Gegenstrom-Wärmetauscher

Die Erfindung betrifft einen schachtförmigen Gegenstrom-Wärmetauscher zur Wärmebehandlung von feinkörnigem Gut durch Heißgas, das den Wärmetauscher im Gegenstrom zum Gut von unten nach oben durchsetzt, enthaltend mehrere übereinander angeordnete, durch trichterförmige Querschnittsverengungen des Schachtes voneinander getrennte Gegenstromkammern sowie wenigstens zwei am oberen Ende des Schachtes angeordnete, parallel geschaltete Zyklone.

Es sind Zyklonvorwärmer bekannt (FR - A - 2 221 039), bei denen der unverzweigte Gasstrom nacheinander mehrere Zyklone durchsetzt und das aus dem Gasstrom abgeschiedene Gut jeweils in eine zum nächst tieferen Zyklon führende Gasleitung eingebracht wird, so daß das Gut die Zyklonstufen insgesamt im Gegenstrom zum Gas von oben nach unten durchsetzt. Ein wesentlicher Nachteil derartiger Vorwärmer ist ihre große Bauhöhe.

Zur Verringerung der Brauhöhe hat man weiterhin mehrstufige Zyklonvorwärmer entwickelt; bei denen sich der Gas- und Gutstrom in aufeinanderfolgenden Stufen jeweils auf zwei parallel geschaltete Zyklone verzweigt, dann wieder vereinigt, erneut verzweigt usw. (FR - A - 2 312 002, Fig. 2; DE - A - 19 06 897, DE - A - 18 01 354, DE - B - 11 54 768). Derartige Vorwärmer erfordern allerdings im Hinblick auf die mehrfache Verzweigung und Wiedervereinigung des Gas- und Gutstromes einen gewissen anlagentechnischen Aufwand.

Eine einfachere Bauweise besitzen demgegenüber schachtfömige Gegenstrom-Wärmetauscher mit mehreren koaxial übereinander angeordneten Gegenstromkammern. Ein bekannter Wärmetauscher dieser Art (Zement-Kalk-Gips 1965, S.628, Bild 9; FR - A - 23 12 002. Fig. 1) besteht aus vier übereinander angeordneten Gegenstromkammern sowie zwei in der obersten Stufe parallel geschalteten Zyklonen. Das Gut soll sich hierbei in den einzelnen Gegenstromkammern unter der Wirkung von Zentrifugalkräften vom Gas trennen und durch die trichterförmige Querschnittsverengung des Schachtes im Gegenstrom zum Gas in die nächst tiefere Gegenstromkammer eintreten.

Um eine zuverlässige Abwärtsbewegung des Gutes im schachtförmigen Gegenstrom-Wärmetauscher zu gewährleisten, sind auch bereits Ausführungen entwickelt worden, bei denen das am Rand oder Boden einer Gegenstromkammer abgeschiedene Gut über äußere, vom Gas nicht beaufschlagte Gutleitungen in die nächste Kammer geleitet wird (FR - A - 1 559 407, DE - A - 22 30 489).

Der Erfindung liegt die Aufgabe zugrunde, einen Gegenstrom-Wärmetauscher der eingangs genannten Art dahin weiterzuentwickeln, daß unter Beibehaltung einer besonders einfachen Bauweise der Wirkungsgrad, d.h. die Wärmeübertragung vom Heißgas auf das feinkörnige Gut, weiter verbessert wird.

Diese Aufgabe wird erfindungsgemäß dadurch gelöst, daß der unterhalb der Zyklone befindliche oberste Teil des Schachtes durch eine Wirbelkammer gebildet wird, die mit der darunter angeordneten Gegenstromkammer des Schachtes durch einen zentralen Gutaustrag und mehrere über den Umfang verteilte und tangential in die Wirbelkammer einmündende Gasleitungen verbunden ist.

Indem erfindungsgemäß die oberste Gegenstromkammer des schachtförmigen Gegenstrom-Wärmetauschers durch eine Wirbelkammer ersetzt wird, errreicht man eine wesentliche Verbesserung des Abscheidegrades in dieser Stufe und damit eine Verringerung des Materialumlaufes zwischen der Zyklonstufe und der obersten Stufe des Schachtes. Dadurch ergibt sich eine erhebliche Verbesserung des thermischen Wirkungsgrades und damit der Wirtschaftlichkeit des Wärmetauschers.

Da durch die erfindungsgemäße Ausgestaltung der obersten Stufe des Schachtes als Wirbelkammer die freitragende Bauweise des schachtförmigen Wärmetauschers nicht beeinträchtigt wird, bleiben die grundsätzlichen Vorzüge der bekannten schachtförmigen Gegenstrom-Wärmetauscher erhalten, und es ergibt sich die Möglichkeit, bereits vorhandene Anlagen auf einfache Weisen nachträglich unzurüsten.

Weitere Erfindungsmerkmale sind Gegenstand der Unteransprüche und werden im Zusammenhang mit der Beschreibung eines Ausführungsbeispieles näher erläutert.

In der Zeichnung zeigt

Fig. 1 einen Vertikalschnitt durch einen erfindungsgemäßen Gegenstrom-Wärmetauscher;

Fig. 2 einen Horizontalschnitt durch die Wirbelstufe des Wärmetauschers (längs der Linie II—II der Fig. 1);

Fig. 3 einen Vertikalschnitt durch ein zweites Ausführungsbeispiel.

Der in der Zeichnung dargestellte schachtförmige Gegenstrom-Wärmetauscher dient beispielsweise als Vorwärmer zur Vorwärmung von feinkörnigem Gut, wie Zementrohmehl, ehe dieses einer nachgeschalteten Brennstufe, beispielsweise einem Drehrohrofen 1, aufgegeben wird.

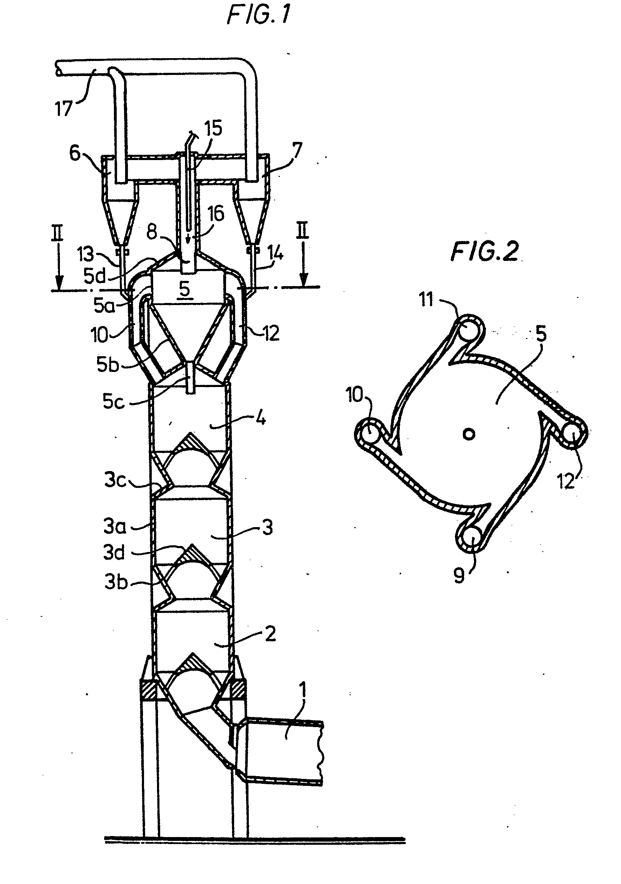

Der Gegenstrom-Wärmetauscher gemäß den Fig. 1 und 2 besteht im wesentlichen aus drei Gegenstromkammern 2, 3, 4, einer Wirbelkammer 5 sowie zwei parallel geschalteten Zyklonen 6 und 7.

Die Gegenstromkammern 2, 3 und 4 setzen sich jeweils aus einem zylindrischen Hauptteil (z.B. 3a), einer trichterförmigen Querschnittsverengung (z.B. 3b) im unteren Bereich sowie einer kegelstumpfförmig nach innen gezogenen Deckwand (z.B. 3c) zusammen. Die Gegenstromkammern sind ferner mit Einbauten (z.B. 3d) oberhalb der trichterförmigen Querschnittsverengung versehen.

Die Wirbelkammer 5 besteht im wesentlichen aus einem zylindrischen Hauptteil 5a, der einen Bestandteil der tragenden Schachtkonstruktion bildet, ferner aus einem sich an diesem zylindrischen Hauptteil 5a nach unten anschließenden Trichter 5b, der über ein Tauchrohr 5c in die Gegenstromkammer 4 mündet, sowie aus einer kegelstumpfförmig nach innen gezogenen Deckwand 5d. Durch diese Deckwand 5d ragt ein die Wirbelkammer 5 mit den darüber angeordneten Zyklonen (z.B. 6,7) verbindendes Tauchrohr 8 hinein.

Die Wirbelkammer 5 steht mit der Gegenstromkammer 4 durch den vom Tauchrohr 5c gebildeten zentralen Gutaustrag sowie durch vier über den Umfang verteilte Gasleitungen 9, 10, 11 und 12 in Verbindung, die tangential in die Wirbelkammer 5 einmünden. Diese Gasleitungen 9 bis 12 gehen von der kegelstumpfförmigen Deckwand der Gegenstromkammer 4 aus, sind durch den tragenden Mantel des Schachtes nach außen geführt und schließen in der Höhe des zylindrischen Hauptteiles 5a der Wirbelkammer 5 tangential an diese an.

Die Gutaustragsleitungen 13, 14 der Zyklone (z.B. 6,7) münden in die Gasleitungen 9 bis 12, und zwar vorzugsweise in den horizontalen Anströmteil dieser Gasleitungen ein. Finden nur zwei Zyklone 6 und 7 in der obersten Stufe Verwendung, so werden entweder auch für die Wirbelkammer 5 nur zwei Gasleitungen vorgesehen oder es werden die Gutaustragsleitungen 13, 14 verzweigt. Selbstverständlich besteht auch die Möglichkeit, in der obersten Stufe vier Zyklone vorzusehen, der Gutaustragsrohre jeweils einer Gasleitung 9 bis 12 zugeordnet sind.

Die Wirkungsweise des erfindungsgemäßen Gegenstrom-Wärmetauschers dürfte ohne weiteres verständlich sein:

Das Gut wird durch eine Leitung 15 in die an das Tauchrohr 8 anschließende, zu den beiden Zyklonen 6 und 7 führende Gasleitung 16 aufgegeben. Das Gut gelangt mit dem Heißgasstrom in die Zyklone (z.B. 6,7), wird dort abgeschieden und über die Gutaustragsleitungen 13 und 14 den Gasleitungen 9 bis 12 zugeführt, während die Abgase aus den Zyklonen 6 und 7 durch die Leitung 17 abgezogen werden. Das in die Gasleitungen 9 bis 12 der Wirbelstufe eingebrachte Gut wird mit dem Heißgas tangential der Wirbelkammer 5 aufgegeben und von der durch die tangentiale Anströmung erzeugten Wirbelsenke in der Wirbelkammer 5 abgeschieden. Über das Tauchrohr 5c gelangt das Gut in die Gegenstromkammer 5 und kommt dort in erneuten Wärmeaustausch mit dem den Schacht von unten nach oben durchströmenden Heißgas. Nach Abscheidung an der Wand der Gegenstromkammer 4 bewegt sich das Gut durch die Querschnittsverengung des Schachtes in die nächst tiefere Gegenstromkammer 3, dann in die unterste Gegenstromkammer 2 und gelangt schließlich hoch vorgewärmt in den Drehrohrofen 1.

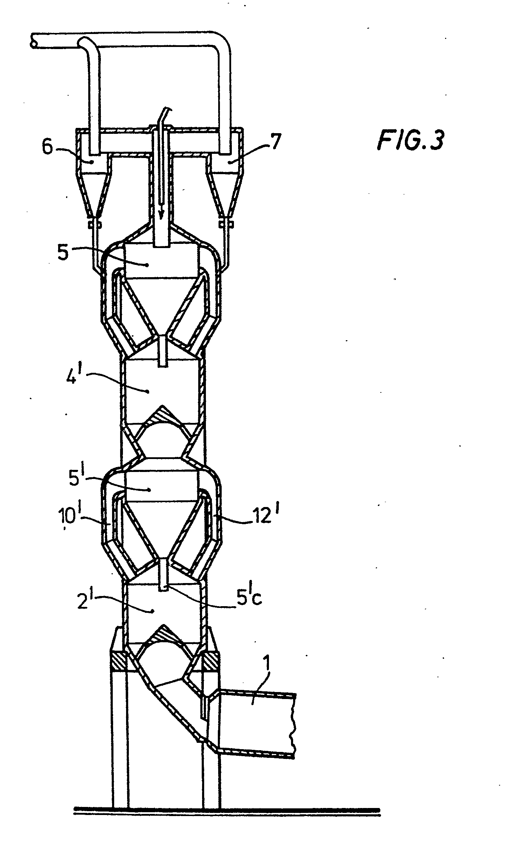

Bei dem in Fig. 3 dargestellten zweiten Ausführungsbeispiel ist außer der den obersten Teil des Schachtes bildenden Wirbelkammer 5 eine im mittleren Bereich des Schachtes zwischen zwei Gegenstromkammern 2', 4' angeordnete weitere Wirbelkammer 5' vorgesehen, die mit der darunter angeordneten Gegenstromkammer 2' durch einen zentralen Gutaustrag 5'c und mehrere über den Umfang verteilte und tangential in die Wirbelkammer einmündende Gasleitungen (sichtbar sind in Fig. 3 die Leitungen 10', 12') verbunden ist. Im übrigen entspricht dieses zweite Ausführungsbeispiel der zuvor erläuterten Anordnung.

**Patentansprüche**

1. Schachtförmiger Gegenstrom-Wärmetauscher zur Wärmebehandlung von feinkörnigem Gut durch Heißgas, das den Wärmetauscher im Gegenstrom zum Gut von unten nach oben durchsetzt, enthaltend mehrere koaxial übereinander angeordnete Kammern (2, 3, 4) die jeweils über eine zum Gutdurchtritt dienende, trichterförmige zentrale Querschnittsverengung miteinander verbunden sind, wobei diese trichterförmige zentrale Querschnittsverengung (3b) zwischen wenigstens zwei benachbarten Kammern zugleich die zum Gasdurchtritt dienende Verbindung darstellt, ferner enthaltend wenigstens zwei am oberen Ende des Schachtes angeordenete, parallel geschaltete Zyklone (6, 7), dadurch gekennzeichnet, daß der unterhalb der Zyklone (6, 7) befindliche oberste Teil des Schachtes durch eine Wirbelkammer (5) gebildet wird, die mit der darunter angeordneten Gegenstromkammer (4) des Schachtes durch einen zentralen Gutaustrag (5c) und mehrere über den Umfang verteilte und tangential in die Wirbelkammer einmündende Gasleitungen (9 bis 12) verbunden ist.

2. Wärmetauscher nach Anspruch 1, bei dem die obere Begrenzung der einzelnen Gegenstromkammern des Schachtes durch eine kegelstumpfförmig nach innen gezogene Deckwand (3c) gebildet wird, dadurch gekennzeichnet, daß die die oberste Gegenstromkammer (4) des Schachtes mit der Wirbelkammer (5) verbindenden Gasleitungen (9 bis 12) von der kegelstumpfförmigen Deckwand dieser Gegenstromkammer (4) ausgehen.

3. Wärmetauscher nach Anspruch 1, dadurch gekennzeichnet, daß die Gutaustragsleitungen (13, 14) der über der Wirbelkammer (5) angeordneten Zyklone (6 und 7) in die die oberste Gegenstromkammer (4) des Schachtes mit der Wirbelkammer (5) verbindenden Gasleitungen (9 bis 12) einmünden.

4. Wärmetauscher nach Anspruch 1, dadurch gekennzeichnet, daß die Wirbelkammer (5) nach oben durch eine kegelstumpfförmige Deckwand (5d) begrenzt wird, durch die ein die Wirbelkammer (5) mit den darüber angeordneten Zyklonen (6 und 7) verbindendes Tauchrohr (8) hindurchragt.

4. Wärmetauscher nach Anspruch 1, dadurch gekennzeichnet, daß die Wirbelkammer (5) aus einem zylindrischen Teil (5a) der einen Bestandteil der tragenden Schachtkonstruktion bildet, und einem sich an diesen zylindrischen Teil nach unten anschließenden Trichter (5b) besteht, der über ein Tauchrohr (5c) in die darunter befindliche Gegenstromkammer (4) einmündet.

6. Wärmetauscher nach Anspruch 1, dadurch gekennzeichnet, daß von unten nach oben aufeinanderfolgend, drei Gegenstromkammern (2, 3, 4) vorgesehen sind.

7. Wärmetauscher nach Anspruch 1, dadurch gekennzeichnet, daß von unten nach oben aufeinanderfolgend eine Gegenstromkammer (2′), eine Wirbelkammer (5′), eine weitere Gegenstromkammer (4′), eine weitere Wirbelkammer (5) und zwei parallel geschaltete Zyklone (6, 7) vorgesehen sind.

**Revendications**

1. Echangeur de chaleur à contre-courant de type à cuve et destiné au traitement thermique de matière à granulométrie fine par du gaz chaud qui monte dans l'échangeur à contre-courant par rapport à la matière, le'échangeur comprenant plusieurs chambres coaxiales et superposées (2, 3, 4) qui communiquent par un rétrécissement central de section en trémie destiné au passage de la matière, ce rétrécissement central de section en trémie (3b) situé entre au moins deux chambres voisines formant également une communication destinée au passage du gaz, échangeur comprenant par ailleurs au moins deux cyclones (6, 7) montés en parallèle et disposés à l'extrémité supérieure de la cuve et caractérisé en ce que la partie supérieure de la cuve située sous les cyclones (6, 7) est formée par une chambre à tourbillonnement (5) qui communique avec la chambre à contrecourant (4) de la cuve située au-dessous d'elle par un passage central de décharge de la matière (5c) et par plusieurs canalisations de circulation de gaz (9 à 12) qui sont réparties à la circonférence et débouchent tangentiellement dans la chambre à tourbillonnement.

2. Echangeur de chaleur selon la revendication 1, dans lequel les différentes chambres à contre-courant de la cuve sont délimitées à l'extrémité supérieure par une cloison tronconique de couverture (3c) en retrait vers l'intérieur, caractérisé en ce que les canalisations de circulation de gaz (9 à 12) qui relient la chambre supérieure à contre-courant (4) de la cuve à la chambre à tourbillonnement (5) partent de la cloison tronconique de couverture de cette chambre à contre-courant (4).

3. Echangeur de chaleur selon la revendication 1, caractérisé en ce que les canalisations de dècharge de matière (13, 14) des cyclones (6 et 7) disposées au-dessus de la chambre à tourbillonnement (5) débouchent dans les canalisations de circulation de gaz (9 à 12) qui relient la chambre supérieure à contre-courant (4) de la cuve et la chambre à tourbillonnement (5).

4. Echangeur de chaleur selon la revendication 1, caractérisé en ce que la chambre à tourbillonnement (5) est délimitée à la partie supérieure par une cloison tronconique de couverture (5d) qui est traversée par un tube plongeur (8) qui relie cette chambre à tourbillonnement (5) et les cyclones (6 et 7) disposés au-dessus de cette dernière.

5. Echangeur de chaleur selon la revendication 1, caractérisé en ce que la chambre à tourbillonnement (5) est formée d'une partie cylindrique (5a) qui forme un composant de la charpente de la cuve, ainsi que d'une trémie (5b) qui prolonge cette partie cylindrique vers le bas et qui débouche par un tube plongeur (5c) dans la chambre à contre-courant (4) située au-dessous.

6. Echangeur de chaleur selon la revendication 1, caractérisé en ce qu'il comprend de bas en haut trois chambres à contre-courant successives (2, 3, 4).

7. Echangeur de chaleur selon la revendication 1, caractérisé en ce qu'il comprend successivement de bas en haut une chambre à contre-courant (2′), une chambre à tourbillonnement (5′), une autre chambre à contre-courant (4′), une autre chambre à tourbillonnement (5) et deux cyclones (6, 7) montés en parallèle.

**Claims**

1. Shaft-like counterflow heat exchanger for heat treating finely granular material by hot gas which passes through the heat exchanger in counterflow to the material from the bottom to the top, comprising a plurality of coaxially superimposed chambers (2, 3, 4) which are connected together in each case via a funnel-like central cross-sectional constriction serving for the material passage, said funnel-like central cross-sectional constriction (3b) between at least two adjacent chambers representing at the same time the connection serving for the gas passage, further comprising at least two parallel-connected cyclones (6, 7) disposed at the upper end of the shaft, characterized in that the upper portion of the shaft disposed beneath the cyclones (6, 7) is formed by a turbulence chamber (5) which is connected to the counterflow chamber (4) of the shaft disposed therebelow by a central material discharge (5c) and a plurality of gas conduits (9 to 12) distributed over the periphery and opening tangentially into the turbulence chamber.

2. Heat exchanger according to claim 1 in which the upper boundary of the individual counterflow chamber of the shaft is formed by a cover wall (3c) drawn inwardly in the form of a truncated cone, characterised in that the gas conduits (9 to 12) connecting the uppermost counterflow chamber (4) of the shaft to the turbulence chamber (5) emanate from the frusto-conical cover wall of said counterflow chamber (4).

3. Heat exchanger according to claim 1, characterised in that the gas discharge conduits (13, 14) of the cyclones (6 and 7) disposed above the turbulence chamber (5) open into the gas conduits (9 to 12) connecting the uppermost counterflow chamber (4) of the shaft to the turbulence chamber (5).

4. Heat exchanger according to claim 1, characterised in that the turbulence chamber (5) is bordered at the top by a frusto-conical cover wall (5d) through which an immersion tube (8) connecting the turbulence chamber (5) to the cyclones (6 and 7) disposed thereabove passes.

5. Heat exchanger according to claim 1, characterised in that the turbulence chamber (5) comprises a cylindrical portion (5a) which forms part of the supporting shaft structure, and a funnel (5b) downwardly adjoining said cylindrical portion and opening via an immersion tube (5) into the counterflow chamber (4) disposed therebelow.

6. Heat exchanger according to claim 1, characterised in that successively from the bottom to the top three counterflow chambers (2, 3, 4) are provided.

7. Heat exchanger according to claim 1, characterised in that successively from the bottom to the top a counterflow chamber (2′), a turbulence chamber (5′), a further counterflow chamber (4′), a further turbulence chamber (5) and two parallel-connected cyclones (6, 7) are provided.

## FIG.1

## FIG.2

FIG.3

0 005 469

2